# EUROPEAN PATENT APPLICATION

(11) **EP 4 666 840 A1**
(43) Date of publication of application: **24.12.2025**
(21) Application number: 24183844.0
(22) Date of filing: 21.06.2024
(51) Int. Cl.: A01F 15/10

(54) **CROP CUTTING DEVICE**

(71) Applicant: CNH Industrial Belgium N.V., 8210 Zedelgem (BE)
(72) Inventor: Devroe, Jeroen, 8210 Zedelgem (BE); Liefooghe, Dries, 8210 Zedelgem (BE)
(74) Representative: CNH Industrial IP Department

(57) **Abstract**

The present invention provides a crop cutting device (1) comprising a crop guiding surface (3), a plurality of knives (5) arranged side-by-side, wherein each knife (5) is pivotable about a knife axis (7) between a retracted inoperative position. The crop cutting device further comprises a plurality of operating units (11) in parallel to the plurality of knives (5). The crop cutting device comprises a selector mechanism (13) configured to selectively engage one or more of the plurality of operating units (11), wherein the selector mechanism (13) includes a rotatable shaft (17) comprising a plurality of engagement elements (19) configured to engage with the respective operating unit (11). The operating units (11) are movable between a disengaged position and an engaged position by a lifting mechanism (23) comprising an elongate element extending between a first side and a second side of a main frame (21).

## Description

The present invention relates to a crop cutting device for agricultural machines or implements.

Agricultural machines or implements such as balers or self-loading wagons are often equipped with a cutting device equipped to shred the cut crop for different purposes. Other agricultural machines such as harvesters may also be equipped with such a cutting device.

The cutting device is usually arranged in crop channel of the baler, the loading wagon or other agricultural machine so that the crop is transported on a crop guiding surface towards a plurality of knives to be cut in contact with the knives' blades.

With regard to the crop channel, such crop cutting devices include a plurality of knives arranged side-by-side in rows, wherein the number of knives protruding next to one another from the crop guiding surface into the crop channel dictates the number of effective blades or edges and thus an achievable length of the cut crop. It is generally desirable to be able to select and use different numbers of blades to adapt to the particular application or harvesting conditions.

To protect the knives from damages by stones or other unwanted particles that are generally not shreddable or choppable and to enable a selection of a desired number of knives, it is customary for the knives to be pivotable relative to a frame of the cutting device so that each knife can be pivoted between a non-operating position and an operating position. In the non-operating position, however, the knife is in a position in which it is largely with-drawn from the crop channel, unable to cut crop. In the operating position, the knife is in a position in which it protrudes into the crop channel so that crop flowing past is crushed or cut in cooperation with the knife. For clamping and subsequent holding of the knife in the operating position each knife is associated with an operating or clamping unit, which has, for example, a spring element. A common, moveable actuator is used to pivot the operating units together with the respective knife from the non-operating position into the operating position and vice versa. In view of the increasing number of installed knives in cutting devices as well as the high-acting forces, the back-and-forth movement of the knives presents a mechanical challenge.

DE 43 02 199 A1 discloses a crop cutting device including chopping knives protruding into a conveyor passage and cooperating with tines on a rotor. The knives are held in the working position by controlled supports, which release them together or individually to swing into the idle position. An elastic overload-protection system also allows the knives to swing briefly into this position on encountering foreign bodies. Each support consists of a spring-loaded thrust rod, engaging at one end in a positioning recess in its respective knife. The rods are supported by their springs on a common connecting cross-member, which is slid by one or more rams in relation to the knives. With its spring each thrust rod forms an overload-protection mechanism movable in relation to the cross-member. Each thrust rod is further coupled to a bar releasing or retaining it, so as to cut its knife in and out of use. The bar is provided with a downwardly protruding cam which is brought into and out of engagement with an edge of an opening by a lifting cam on a rotatable control shaft which cooperates with the bar.

DE 198 05 854 C1 discloses a crop cutting device in which each pivotable knife is operable by a spring-loaded sliding bar carrying a roller. The end of each sliding bar carrying the roller is supported by an arm that is rotatable about a shaft. Some of the sliding bars have their support arms extend to various depths below the shaft. A blocking bar extending parallel to the shaft may be raised to different heights to bring it into blocking engagement with the extended arms of the various sliding bars, to block pivoting movement of the corresponding knife.

EP 2 653 025 A1 discloses a cutting device which includes a cam shaft that is operable to lift selected spring-loaded arms from a first position in which they are bypassed by an actuator into a second position in which they are engaged by the actuator and brought into contact with respective knives. In this way only selected knives are extended. In the retracted position the knives still protrude slightly from the slotted plate in which they are arranged, thus forming an obstacle to the flow of the crop. This prior art device is fairly complex and in view of the very dusty environment is prone to failure as the spring-loaded arms are repeatedly disengaged and then re-engaged by the actuator.

EP 2 110 014 A1 discloses a cutting device comprising a selection shaft that is received in circular openings in levers operating the knives. A narrow channel leads from an edge of each knife to each circular opening. The selection shaft has locally flattened parts which fit in the channels. By rotating the selection shaft, it can either be locked in a circular recess to disable the corresponding knife or allowed to pass through the channel when the knife is moved to its extended position. In the retracted position, the knives are completely hidden under the lower wall of the crop inlet channel, thus rendering them inaccessible for maintenance or replacement. The design of this prior art device requires a relatively large space and the levers and shaft have relatively complex shapes. Moreover, the repeated movement of the shaft through the narrow channels is prone to jamming.

EP 1 609 354 A1 discloses a crop cutting device for harvested crop which includes a selector mechanism having blocking tabs. These tabs cooperate with roll pins extending crosswise through support rods engaging the knives. The blocking tabs are integrated into four separate strips fixed on a cylindrical tube. The tube can be lowered or raised to engage or disengage the blocking tabs. Here, the retracted knives still protrude slightly from the slotted plate in which they are arranged, thus impeding the flow of the crop. Since the tabs are arranged in strips they have a fixed spacing and cannot be rearranged by a user.

Another technical solution by the applicant describes a construction with a double frame having a first frame portion and a second frame portion which are pivotably connected and movable relative to each other in order to disengage and engage the selection mechanism with the knife units. Such structure having two frame portions is heavy, difficult to operate, and thus costly, particularly when attempting to automate its movement.

It is therefore the object of the present invention to provide a crop cutting device which overcomes at least some of the disadvantages of the prior art as listed above, which represents a rather simple, light and automatable construction, which enables a smooth, safe and remotely controllable knife selection, which requires little installation space, and which generally ensures a reliable and secure cutting function also in a very dusty environment.

This object is achieved by the subject matter of claims 1 and 15 of the present invention. Advantageous embodiments and aspects are described in the dependent claims.

According to an aspect of the invention a crop cutting device is proposed which comprises:
a crop guiding surface including a plurality of substantially parallel slots extending in a crop transport direction over the crop guiding surface;
a plurality of knives arranged side-by-side, wherein each knife is aligned with a respective slot and is pivotable about a knife axis extending substantially perpendicular to the slots, between a retracted inoperative position in which each knife is located substantially below the crop guiding surface and an extended operative position in which at least a cutting edge of each knife projects above said guiding surface;
a plurality of operating units in parallel to the plurality of knives, each operating unit being associated with a respective knife and each being configured to being operated to bring the associated knife from the retracted inoperative position into the extended operative position, wherein the operating units are movable between a disengaged position and an engaged position; and
a selector mechanism configured to selectively engage one or more of the plurality of operating units, wherein the selector mechanism is movable between a selection position and a working position, and vice versa, and includes a rotatable shaft extending substantially perpendicular to the slots, wherein the rotatable shaft comprises a plurality of engagement elements, each engagement element configured to engage with the respective operating unit;
a lifting mechanism comprising an elongate element extending between a first side and a second side of a main frame of the crop cutting device and an actuator configured to move the elongate element with respect to selector mechanism between a low position and a lifted position, and vice versa, thereby moving the operating units (11) between one and the other of the disengaged position and the engaged position.

With these features, a crop cutting device is provided that is lightweight compared to known constructions of the prior art as well as simple to manufacture and handle which increases the cost effectiveness. The elongate element may be of any shape such as a bar, elongate plate, a welding construction of multiple components or a similar elongate component between the first side and the second side of the main frame and made, for example, of a suitable sheet metal which is very affordable. Moreover, the proposed crop cutting device comprises a simple construction, which can be maintained and repaired in remote locations without the requirement of special tools or trained personnel. It can be operated by a single operator.

In one embodiment of the invention, the positions of the selector mechanism and the lifting mechanism as well as their movements may be independent from each other. In other embodiments, the position of the selector mechanism and the lifting mechanism as well as their movements may be dependent on each other.

In some embodiments, when the selector mechanism is moved into the selection position and the elongate element is moved into the lifted position, the operating units are brought into the disengaged position and a free rotation of the rotatable shaft for selecting certain knives of the plurality of knives to be brought in the extended operative position is enabled. This situation may also refer to as a selection mode of the crop cutting device. Also in some embodiments, when the selector mechanism is moved into the working position and the elongate element is moved into the low position, the operating units are brought into the engaged position and the selected knives of the plurality of knives are brought in the extended operative position. This situation may also refer to as a working mode of the crop cutting device.

The operating unit is preferably a biasing element. The biasing element comprises an elastic element such as one or more coil springs which are pretensioned in the operating position resulting in a movement of the corresponding knife into the extended operating position. Because of the pretensioning, the biasing element enables the knife to retract toward its retracted inoperative position when foreign matter other than crop material is caught by the corresponding knife. The operating units are preferably pivotably supported wherein the pivot axis of each operating unit is in front of the selection mechanism in the crop transport direction. By pivotally supporting the operating units, the lifting mechanism can be designed as a lightweight construction as the weight of the operating units is partly supported by the pivot axis.

The elongate element is preferably arranged between the plurality of knives and the rotatable shaft in the crop transport direction. The elongate element is preferably arranged below the operating units such that the operating units rest on the elongate element due to their weight. Therefore, a simple construction for the lifting mechanism is suggested which is cost effective to produce.

In an embodiment, the elongate element guides the operating units between the lowering and the lifted position, such that the operating units are guided between their disengaged and engaged position. When the elongate element is moved towards the lowered position, the operating units are configured to be moved towards their engaged position. When the elongate element is moved towards the lifted position, the operating units are configured to be moved towards their disengaged position. Due to this configuration, the movement of the elongate element has an effect on the movement of the operating units, thereby providing a simple and lightweight construction.

In some embodiments, the first side and the second side of the main frame preferably extend substantially parallel in the crop transport direction. The first side and the second side of the main frame are preferably arranged in lateral direction to the plurality of knives arranged side by side. The main frame encloses with further advantage at least one of the plurality of knives, the operating units and the selector mechanism in lateral direction relative to the crop transport direction.

In embodiments, the crop cutting device comprises multiple selector mechanisms arranged adjacent to each other between the first and second side of the main frame. More preferably, the multiple selector mechanisms are arranged adjacent to each other across the width of the crop cutting device. It is also imaginable that the optional multiple selector mechanisms may be spaced apart from each other by the main frame or may be arranged offset in the width direction of the crop cutting device.

Optionally, said selector mechanism includes two side plates carrying the rotatable shaft. The side plates may be arranged on the first side and the second side of the main frame, respectively. It is further preferred that the side plates are movable with respect to the main frame between a selection position and a working position.

The rotatable shaft is preferably rotatably supported by both side plates. When the side plates are moved between the selection position and the working position, the rotatable shaft is also moved together with the side plates. With further advantage, the direction of the movement of the side plates between the selection position and the working position is substantially parallel to the crop transport direction.

Due to the movable side plates, the rotatable shaft can be moved together with the two side plates between the selection position and the working position without the need of any additional frame construction. The movable side plates can be quickly and inexpensively produced e.g. by CNC laser cutting of sheet metall. By means of the elongate element of the lifting mechanism, all operating units can be lifted simultaneously, wherein the operating units are supported during the lifting movement by the elongate element.

In some embodiments, the two side plates face each other. The two side plates may be arranged on inner sides of the main frame such that the movable two side plates supporting the selector mechanism are protected by the main frame. Thus, both of the side plates and the main frame preferably enclose the selector mechanism in lateral direction of the crop cutting device. Optionally, the two side plates may comprise bearings, e.g. friction bearings or bearing brackets, to rotatably support the rotatable shaft. Alternatively, the two side plates may also be arranged on outer sides of the main frame.

In other embodiments, the two side plates comprise first securing means to secure the position of at least one side plate, e.g. in the selection position or the working position, relative to the main frame. Additionally or alternatively, the two side plates comprise second securing means to secure the position of the rotatable shaft in at least one or preferably in multiple positions which are angularly spaced apart from each other and are defined by the position of the engagement elements of the rotatable shaft. The first and/or second securing means may be through holes and/or bores in which in a pin may be inserted. The through hole and/or bore as first and/or second securing means penetrate one of the two side plates and the other one of the main frame and the rotatable shaft.

In an embodiment, the lifting mechanism may be arranged and supported by the side plates. Additionally, the elongate element may extend between the two side plates.

In one embodiment, it is preferred that the elongate element further comprises a first bar and a second bar parallel to the first bar extending between the first side and the second side of the main frame. The operating units preferably extend between the first bar and the second bar. Thereby, the second bar forces the operating units towards the extended operating position, e.g. when foreign matter, crop material or increased friction impede the movement of the operating units.

The first bar and the second bar are not necessarily bars as such. Alternatively, the first bar and the second bar may be a first contact section and a second contact section of the elongate element extending between the first side and the second side of the main frame.

Additionally, each of the first bar and the second bar or the first contact section and the second contact section may provide a surface to contact the operating units, respectively. The first contact section and the second contact section may be integrally formed with the elongated element, e.g. in a sheet metal welding construction. All features relating to the first bar and the second bar may preferably also applicable to the first contact section and the second contact section. Therewith, a variety of configurations of designing the elongate element are possible, which allow a cost-effective design of the elongate element according to given situations.

Preferably, the second bar is arranged above the first bar. Optionally, the first bar and the second bar may be arranged in a predetermined distance to each other, wherein the operating units extend through the space between the first bar and the second bar. The first bar and the second bar may be connected with each other at respective end portions of each bar near each respective side plate. Thus, the movement of the operating units towards the extended operating position can be enforced even under difficult conditions.

Further optionally, divider plates may be installed which at least partly extend between in the intermediate space between the first bar and the second bar. The area of each divider plate extends perpendicular to the first bar and/or the second bar. Each divider plate may be attached to one of the first bar and the second bar or both. The divider plates are further arranged in the intermediate space between each of the operating units over the width of the crop cutting device. The divider plates are preferably provided in equal intervals and serve to distance at least ends of the operating units from each other. Optionally, the divider plates are configured to guide at least one end of each of the operating units between two adjoining divider plates between the disengaged position and the engaged position. The divider plates therefore prevent soiling of the selector mechanism, guide at least partly the operating units between the disengaged position and the engaged position and distance the operating units in equal intervals.

In other preferred embodiments, the lifting mechanism may further comprise a drive shaft extending between the first side and the second side of the main frame, wherein the drive shaft is rotatably fixed to two crankarms that are connected to the first bar via a connecting rod. This feature provides a mechanism that enables to lift and support the first bar at multiple locations. Thus, the first bar is uniformly lifted at both ends, which results in a simultaneous and uniform movement of the operating units. With further advantage, the drive shaft only needs to be driven on one side of the shaft. Alternatively, the driveshaft may be fixedly attached to the crankarms, for example by positive mechanical engagement or by fastening means. Further optionally, the drive shaft may be rotatably fixed to multiple crankarms each connected to the first bar via a connecting rod. Preferably the drive shaft and the crankarms are moveable such that the elongated element is moved between its low position and its lifted position.

In some embodiments, each of the two crankarms may be rotatably limited by a respective end stop limiting the movement of each of the two crankarms respective to one of the low position and the lifted position of the elongated element. Additionally, the crankarms may be rotatable in clockwise or counterclockwise direction. Preferably an angle of movement of the two crankarms in respect to the elongated element between the low position and the lifted position being less than or equal to 360°, more preferably less than or equal to 180°. Alternatively, each of the two crankarms is not rotatably limited, such that full rotations of each of the crankarms are possible.

Optionally, each of the crankarms may be configured to perform one full rotation of 360°, preferably in clockwise or counterclockwise direction. The end stops therefore support the crankarm and the load acting thereon in the low position and the lifted position of the elongated element. When the rotation of the drive shaft and respectively of the crankarm is limited to less than 180°, any undesired self-locking near the top or bottom dead center of the crankarm can be prevented.

In further embodiments, the drive shaft may be directly rotatably limited by a respective end stop in one of the low position and the lifted position of the elongated element. For this purpose, the drive shaft may comprise a shoulder or nose on the circumference of the drive shaft that is configured to engage with a respective end stop.

The end stops can be configured as a slotted hole in one of the crankarm and in one of the two side plates, wherein in the other one a pin or a bolt is fixedly attached and is guided within the slotted hole. Alternatively, the end stops may be configured as a protrusion in one of the two side plates, preferably a stud, pin or a latch, configured to limit the rotational movement of one of the drive shaft and the crankarms directly.

In embodiments, each of the end stops may be positioned such that when the elongated element is in the lifted position, each of the two crankarms is angularly positioned behind a top dead center, and when the elongated element is in the low position, each of the two crankarms is angularly positioned before a bottom dead center. When the end stops are arranged in such a way, the lifting mechanism is configured to be self-locked in either one position of the low position and the lifted position of the elongated element in which the end stops support the weight of the lifting mechanism and partly of the operating units.

Additionally, third securing means may be provided to lock one of the crankarms, the driveshaft, the connecting rod, the first rod and the second rod when the elongated element is in one of the low position and the lifted position.

In other embodiments the actuator may be configured to rotate the drive shaft and thereby lift the elongate element. Thus, the lifting mechanism can be driven on both ends of the drive shaft or on at least one end. The actuator may be a hydraulic or pneumatic cylinder in combination with a lever coupled to the drive shaft, a hydraulic motor, an electric motor, or an electric actuator. These actuators allow to operate the lifting mechanism remotely and effortless such as from the cab of an agricultural machine. Alternatively, the actuator may be a handheld tool operated by a user, such as a wrench, a ratchet, and a lever connectable to the drive shaft. Optionally, the drive shaft comprises a coupling portion enabling the actuator to be coupled with the drive shaft.

With further benefits the actuator may be configured to move the elongate element directly, by a linkage, or by a flexible means such as a chain. The movement of the actuator can be transmitted into a movement of the elongate element by alternative constructions, whereas even more compact and cost-effective solutions can be provided to move the operating units between the extended operating position and the retracted inoperative position. The actuator may be one of the above listed ones. An indirect movement of the elongate element by the actuator may comprise a transmission ratio by gears, rollers, or a linkage, wherein the elongate element can be moved by even smaller actuators.

In an embodiment comprising a drive shaft and two crankarms, the two crankarms may be rotatably supported by a respective one of the two side plates. Thereby, the load of the lifting mechanism and partially of the engaging units can be at least partially supported by the two side plates. Alternatively, each of the crankarms is supported by a respective one of the two side plates. The support of the crankarms or the drive shaft can be provided by friction bearings or bearing brackets.

In some embodiments, each of the two side plates may comprise a first guiding means configured to guide the elongate element. With this measure, the elongate element can be guided linearly between the low position and the lifted position. Alternatively, the first guiding means may be configured to guide the first bar and the second bar of the elongate element. In a beneficial manner, both bars can be guided by the same guiding means respectively at each of the two side plates.

Preferably, the first guiding means is a slotted hole within each of the two side plates each guiding an end portion of the elongate element, respectively. In the case of a slotted hole as first guiding means, a very simple and rigid guiding means is suggested which can be integrally formed within the two side plates.

In embodiments, each of the two side plates may further comprise a second guiding means configured to movably couple each of the two side plates to the main frame. The second guiding means enables each of the two side plates to be moved between the selection position and the working position allowing free rotation of the rotatable shaft.

Because the two side plates commonly support the rotatable shaft, they are connected with each other in the transverse direction to the crop transport direction. Thus, they can be moved simultaneously between the selection position and the working position.

In further embodiments, the second guiding means may comprise a slotted hole in one of the two side plates and the main frame in operative association with studs fixed to the other one of the two plates and the main frame. This construction is very simple and cost effective and can be manufactured at least partly integrally with the side plates and the main frame. The construction further allows a linear movement between the selection position and working position of the two side plates by way of a linear friction bearing in form of the slotted hole in association with multiple studs.

In another aspect of the present invention, an agricultural machine comprising a crop cutting device according to one of the embodiments above is proposed. The agricultural machine preferably is a baler, a forage harvester, a hay loader, or a swather. The crop cutting device is preferably an implement detachably coupled to the agricultural machine. Any structural elements and embodiments of the crop cutting device described herein also apply to the agricultural machine according to another aspect of the invention.

Preferred embodiments and advantages of the crop cutting device and the agricultural machine according to the invention will now be described with reference to the attached drawings, in which:
- Fig. 1: is a sectional view of the crop cutting device according to a preferred embodiment of the invention with the side plates in the working position and with the plurality of knives in the extended operative position;
- Fig. 2: is a sectional view of the embodiment of Fig. 1 with the side plates in the selection position and with the plurality of knives in the retracted inoperative position;
- Fig. 3: is a sectional view of the embodiment of Fig. 1 in with the side plates in the selection position, the operating units in the disengaged position and with the plurality of knives in the retracted inoperative position;
- Fig. 4: is a side view of the embodiment of Figs 1 to 3 with the side plates in the selection position; and
- Fig. 5: is a side view of the embodiment of Figs. 1 to 4 with the side plates in the working position.

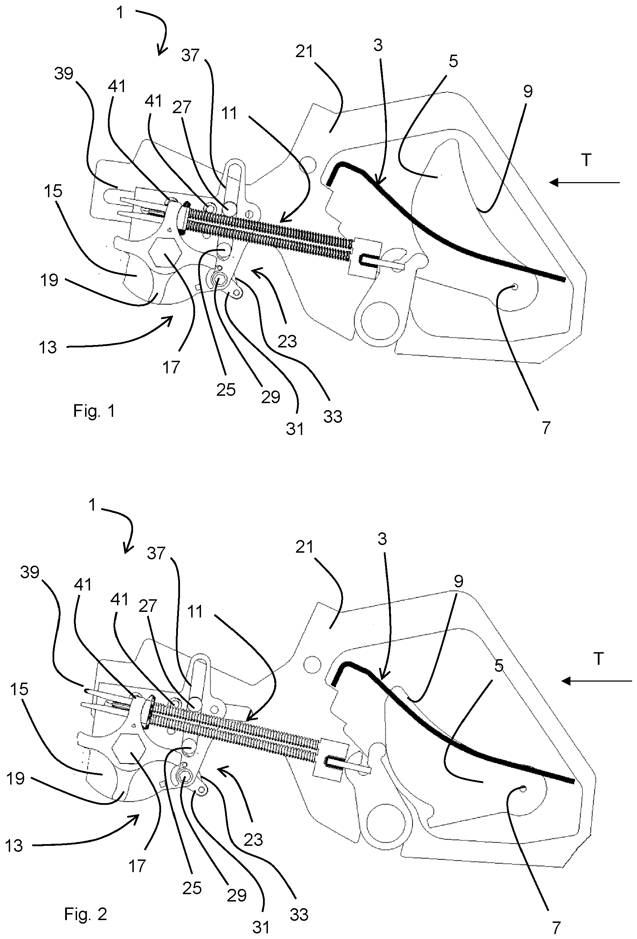

Fig. 1 shows a preferred embodiment of a crop cutting device 1 according to the invention in a sectional view of the crop cutting device 1. The sectional view is along the length of the crop cutting device 1 parallel to a crop transport direction T. The crop cutting device 1 is, for example, suitable for a pick-up of a baler the pick-up gathering crop material from the field and cutting the gathered crop material by the plurality of knives 5 in operative association with a rotating knife (not shown) comprising a plurality of knife blades (not shown) meshing with the plurality of stationary knives 5 pivotably mounted about a knife axis 7. The plurality of knives 5 is arranged side-by-side and mounted below a crop guiding surface 3 consisting of a sheet metal comprising multiple slots (not shown). The slots are configured such that each knife of the plurality of knives 5 can protrude through a respective slot in the extended operative position which will described later.

Each knife of the plurality of knives 5 is aligned with a respective slot and is pivotable about the knife axis 7 which is defined for example by a shaft. The knife axis 7 extends substantially perpendicular to the slots across the width of the crop cutting device 1. The plurality of knives 5 can be moved between a retracted inoperative position in which each knife of the plurality of knives 5 is located substantially below the crop guiding surface 3 and an extended operative position where at least a cutting edge 9 of each knife of the plurality of knives 5 projects above said guiding surface 3. By selecting certain knives of the plurality of knives 5 to be moved into the retracted inoperative position or into the extended operative position in cooperation with the rotating knife (not shown) a cutting width of the crop cutting device 1 can be set.

The crop cutting device 1 comprises a plurality of operating units 11 which are arranged in parallel to the plurality of knives 5. Each operating unit 11 is associated with a respective knife of the plurality of knives 5 and each operating unit 11 is configured to being engaged to bring the associated knife of the plurality of knives 5 from the retracted inoperative position into the extended operative position. In the shown embodiment, each operating unit 11 comprises a packet of coil springs arranged in line with each knife of the plurality of knives 5, such that the spring force of the coil springs is exerted perpendicular to the knife axis 7 on the respective knife of the plurality of knives 5 to move the respective knife between the retracted inoperative position and the extended operative position depending on the position of the operating unit 11.

In order to select certain knives of the plurality of knives 5 to be moved between the retracted inoperative position and the extended operative position, a selector mechanism 13 is provided. The selector mechanism 13 is configured to selectively engage one or more of the plurality of operating units 11 such that the respective knife of the plurality of knives 5 can be brought from the retracted inoperative position into the extended operative position. The selector mechanism 13 includes a rotatable shaft 17 comprising a plurality of engagement elements 19. Each engagement element 19 is configured to engage with the respective operating unit 11. In the depicted embodiment, the engagement element 19 is a lever rigidly attached to the rotatable shaft 17. The engaging element 19 exerts a force on the respective operating unit 11, when the selector mechanism 13 is in the working position and the operating unit 11 is also in the engaged position. This situation is especially shown in Fig. 1. In the embodiment of Fig. 1, the operating unit 11 indirectly engages with the respective knife of the plurality of knives 5 via a linkage.

The selector mechanism 13 includes two side plates 15 carrying a rotatable shaft 17, which extends substantially perpendicular to the slots. The two side plates 15 are substantially flat and comprise a bearing means such as a friction bearing to rotatably support the shaft 17. In the sectional view of Fig. 1 only one side plate 15 can be seen. The second side plate 15 is located on the other, non-visible side of the crop cutting device 1 which is substantially mirrored and structurally identical to the pictured side of the crop cutting device 1. In the shown embodiment, the two side plates 15 are essentially parallel to the plurality of knives 5.

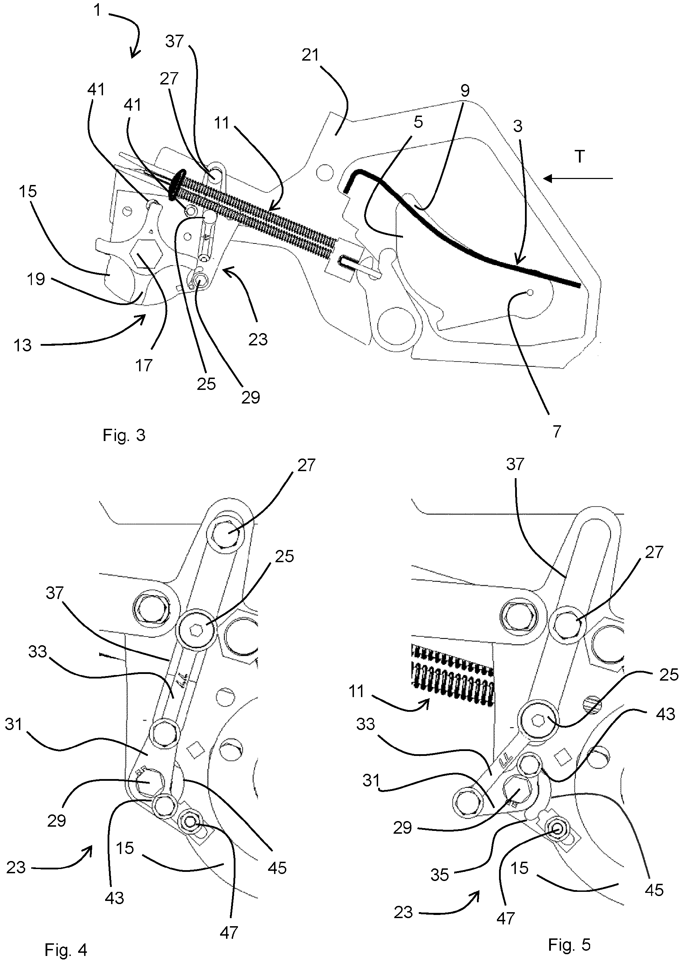

The two side plates 15 are movable with respect to a main frame 21 between a selection position and a working position. The selection position of the side plates 15 enables a free rotation of the rotatable shaft 17 and the working position of the side plates 15 enables an engagement of each engagement element 19 on the rotatable shaft 17 with the respective operating unit 11. The selection position of the side plates 15 will be described in more detail with respect to Fig. 3. The movement of the side plates 15 between the selection position and the working position is a linear movement as shown when comparing the different positions in Figs. 1 and 3. When the side plates 15 are in the working position, the rotatable shaft 17 exerts a force onto the operating units 11 via the respective engaging elements 19 causing a movement of the corresponding knife of the plurality of knives 5.

The main frame 21 is also substantially flat, preferably made of a sheet metal. The operating units 11 are pivotably connected to the main frame 21 via the linkage and movable between the disengaged position and the engaged position by the lifting mechanism 23.

The lifting mechanism 23 is shown in an enlarged section in Figs. 4 and 5 in detail. The lifting mechanism 23 comprises an elongate element extending between the two side plates 15. An actuator is configured to lift the first elongate with respect to the side plates 15. The elongate element is in this embodiment embodied as a first bar 25, and the second bar 27. Both of the first bar 25 and the second bar 27 are displayed in the displayed preferred embodiment as metal pipes but not limited thereto. In alternative not shown embodiments, the elongate element may be a metal plate or a welding construction with a first contact section and a second contact section. Here, the actuator is a hydraulic actuator which can be remotely controlled. The actuator may be a hydraulic cylinder in operative association with an arm coupled to the lifting mechanism 23 to provide a rotational driving force to the lifting mechanism 23. Alternatively, the actuator may be a lever arm coupled to the drive shaft 29 configured to be manually operated by an operator of the crop cutting device 1. In other, not shown embodiments, the actuator may be configured to move the elongate element directly, by a linkage, or by a flexible means such as a chain, belt or rope. Thereby, a transmission ratio can be achieved and also a compact and lightweight design of the lifting mechanism 23 may be provided. In other not shown embodiments, the actuator may be configured to move both of the two side plates 15 between the selection position and the working position and the elongate element between the low position and the lifted position simultaneously via a linkage. Such a coupled movement of both of the two side plates 15 and the lifting mechanism 23 makes a separate actuator for moving the side plates 15 superfluous.

Further, the second bar 27 may be coupled to the first bar 25 in a predetermined distance by a connecting plate. Because of the support by the first bar 25 and the second bar 27, the operating units 11 may be effectively lifted or lowered into the disengaged position or the engaged position, respectively. As can be seen in the sectional view of Fig. 1, the operating units 11 extend into the intermediate space between the first bar 25 and the second bar 27. The second bar 27 thus further secures the operating units 11.

According to the shown embodiment, the lifting mechanism 23 comprises a drive shaft 29 extending between the two side plates 15. The drive shaft 29 is also parallel to the first and second bars 25, 27. The drive shaft 29 is rotatably fixed to two crankarms 31 by positive engagement, here a hexagonal form fit between each of the crankarms 31 with the drive shaft 29. Each crankarm 31 is connected to the first bar 25 via a connecting rod 33. This crankarm-connecting rod mechanism is a commonly known mechanism providing a transmission ratio. A rotational momentum is exerted onto the drive shaft 29 and the connecting rod 33 provides a linear force and movement.

Each of the two crankarms 31 is rotatably limited by a respective end stop 35 in one of the low position and the lifted position of the I elongate element. The angle of movement of the two crankarms 31 between the low position and the lifted position of the elongate element is preferably less than or equal to 180°. The end stops can be seen in greater detail in Figs. 4 and 5. Thus, further details regarding the end stops 35 will be described in association to Figs. 4 and 5. In other embodiments, the drive shaft 29 and the crankarms 31, respectively, are not rotatably limited, that is the drive shaft 29 with the connected crankarms 31 can be rotated in full rotations, wherein one full rotation corresponds to a lifting and a lowering of the operating units 11.

The crankarm 31 may be rotatably supported by the side plate 15. A cylindrical portion of the crankarm 31 penetrates a through hole of the side plate 15 forming a friction bearing. This rotational support of each of the crankarms 31 with the respective side plate 15 is very effective and cost efficient.

As shown in Fig. 1, each of the two side plates 15 comprises a first guiding means 37 configured to guide the first bar 25 and the second bar 27 of the elongate element by the configuration of a slotted bore. The slotted bore is provided as a cut-out in of the side plate 15 serving as friction bearing for the first bar 25 and the second bar 27 of the elongate element. The slotted bore extends substantially straight such that a movement of the first and second bars 25, 27 is a linear movement along the extension of the slotted bore.

The movable side plates 15 further comprise a second guiding means 39 configured to couple and movably guide each of the two side plates 15 with respect to the main frame 21. The second guiding means 39 comprises a slotted bore in one in the substantially flat portions of main frame 21 in operative association with two studs 41 fixed to each of the side plates 15. Also here, a friction bearing is provided that allows the studs 41 with the side plate 15 to be moved along the extension of the slotted bore. The slotted bore of the second guiding means 39 extends substantially straight and parallel to the operating units 11 in the engaged position.

Fig. 2 also depicts a sectional view of the embodiment of Fig. 1 wherein the side plates 15 are in the selection position and the operating units 11 are in the engaged position. The plurality of knives 5 are in Fig. 2 in the retracted inoperative position. In comparison with the position of Fig. 3, the operating units 11 are pivoted into the extending operating position but are not yet in engagement with the selection mechanism 17. When the selection mechanism 17 is set into the selection position, a gap between the engaging means 19 of the selection mechanism 17 and the operating units 11 is formed facilitating the movement of the operating units 11. When the selection mechanism 17 is moved forward opposite to the crop transport direction T into the working position, the situation of Fig. 1 can be accomplished.

Fig. 3 shows the embodiment of Fig. 1 in a sectional view with the two side plates 15 in the selection position, the operating units 11 in the disengaged position and with the plurality of knives 5 in the retracted inoperative position. A comparison between the positions shown in Figs. 1 and 3 reveals that the selection mechanism 17 is moved backwards in the crop transport direction T along the extension of the second guiding means 39 into the selection position whereby the selection mechanism 17 is moved relatively to the main frame 21. The lifting mechanism 23 is lifted from the low position shown in Fig. 1 to the lifted position shown in Fig. 3. In the lifted position of the elongate element in Fig. 3, the first bar 25 now supports the operating units 11. The plurality of knives 5 are moved substantially below the crop guiding surface 3, whereas the crop guiding surface 3 is covering most of the cutting edges 9 of the plurality of knives 5. The upward pivoting movement of the operating units 11 in a radial direction with respect to the rotatable shaft 17 enhances the clearance between the rotatable shaft 17 and its engaging means 19 from the operating units 11 to allow the rotatable shaft 17 to be freely rotated thus enabling the selection. The first and second bars 25, 27 are moved linearly along the extension of the first guiding means 37 while the operating units 11 are pivoted upwards.

Fig. 4 is a side view of the embodiment described in Figs. 1 to 3 from the side not shown in Figs. 1 to 3, i.e. as seen out of the drawing plane, with the elongate element in the lifted position. The portions of the main frame 21 have been removed to get a better understanding of the lifting mechanism 23. The crankarm 31 is attached to an end of the drive shaft 29 while the connecting rod 33 couples the crankarm 31 with the first elongate element 25. The first and second bars 25, 27 are connected with each other by a connecting plate (not shown). Each of the crankarms 31 comprises a main arm coupled to the connecting rod 33 and an auxiliary arm 43 serving as part of the end stop 35. The auxiliary arm 43 comprises a bolt extending through the auxiliary arm 43 into a curved slotted bore 45 of each of the side plates 15. The end portions of the curved slotted bore 45 provide an end stop 35 for the crankarm 31 and thus for the lifting mechanism 23. The curved slotted bore 45 is designed such that it allows a movement of the auxiliary arm 43 of equal or less than 180°.

The end stops 35 are positioned such that when the elongate element is in the lifted position, the crankarm 31 is angularly positioned behind a top dead center, and when the elongate element is in the low position, the crankarm 31 is angularly positioned before a bottom dead center. The end stops 35 and especially the curved slotted bore 45 are arranged such that the upper end stop 35 in the height direction of the crop cutting device 1 is above a top dead center and the lower end stop 35 is before a top dead center. Thereby, self-locking of the crankarm 31 and the connecting rod 33 in the lower top dead center can be prevented. When returning the lifting mechanism 23 from the lifted position into the low position of the elongate element the weight of the first and second bars 25, 27 and the weight of the operating units 11 laying on the first bar 25 help to overcome the top dead center more easily.

Further, in Fig. 4 a securing means is disclosed securing the auxiliary arm 43 such that the lifting mechanism 23 can be secured in the selection position thus preventing an accidental dropping of the lifting mechanism 23.

Fig. 5 is a side view of the embodiment of Figs. 1 to 3 seen from the other, non-visible side of Figs. 1 to 3, i.e. as seen out of the drawing plane, with the elongate element in the lifted position. Compared with the position shown in Fig. 4, the movement of the crankarm 31 and the movement of the auxiliary arm 43 relative to the curved slotted hole 45 can be recognized.

With the present invention a crop cutting device is provided which enables a smooth, safe and remotely controllable knife selection, which requires little installation space and which generally ensures a reliable and secure cutting function also in a very dusty environment.

It is noted that it shall be obvious for the skilled person to combine any structural or functional elements from the description above to form new embodiments that are not described herein, unless that these newly formed embodiments do not contradict each other from the technical point of view and understanding of the person skilled in the art.

### List of reference numbers:

- 1: crop cutting device
- 3: crop guiding surface
- 5: knife/ plurality of knives
- 7: knife axis
- 9: cutting edge
- 11: operating unit
- 13: selector mechanism
- 15: two side plates
- 17: rotatable shaft
- 19: engagement element
- 21: main frame
- 23: lifting mechanism
- 25: first bar
- 27: second bar
- 29: drive shaft
- 31: crankarm
- 33: connecting rod
- 35: end stop
- 37: first guiding means
- 39: second guiding means
- 41: stud
- T: crop transport direction
- 43: auxiliary arm
- 45: curved slotted bore
- 47: securing means

## Claims

1. Crop cutting device (1) comprising:
a crop guiding surface (3) including a plurality of substantially parallel slots extending in a crop transport direction (T) over the crop guiding surface (3);
a plurality of knives (5) arranged side-by-side, wherein each knife (5) is aligned with a respective slot and is pivotable about a knife axis (7) extending substantially perpendicular to the slots, between a retracted inoperative position in which each knife (5) is located substantially below the crop guiding surface (3) and an extended operative position in which at least a cutting edge (9) of each knife (5) projects above said guiding surface (3);
a plurality of operating units (11) in parallel to the plurality of knives (5), each operating unit (11) being associated with a respective knife (5), and each being configured to being operated to bring the associated knife (5) from the retracted inoperative position into the extended operative position, wherein the operating units (11) are movable between a disengaged position and an engaged position; and
a selector mechanism (13) configured to selectively engage one or more of the plurality of operating units (11), wherein the selector mechanism (13) is movable between a selection position and a working position and includes a rotatable shaft (17) extending substantially perpendicular to the slots, wherein the rotatable shaft (17) comprises a plurality of engagement elements (19), each engagement element (19) configured to engage with the respective operating unit (11); and
a lifting mechanism (23) comprising an elongate element extending between a first side and a second side of a main frame (21) of the crop cutting device (1) and an actuator configured to move the elongate element with respect to selector mechanism (13) between a low position and a lifted position, and vice versa, thereby moving the operating units (11) between one and the other of the disengaged position and the engaged position.

2. Crop cutting device (1) according to claim 1, **characterized in that** said selector mechanism (13) further comprises two side plates (15) carrying the rotatable shaft (17).

3. Crop cutting device (1) according to one of the previous claims, **characterized in that** the elongate element comprises a first bar (25) and a second bar (27) parallel to the first bar (25) extending between the first side and second side of the main frame (21), wherein the operating units (11) extend preferably between the first bar (25) and the second bar (27).

4. Crop cutting device (1) according to one of the previous claims, **characterized in that** the lifting mechanism (23) further comprises a drive shaft (29) extending between the first side and the second side of the main frame (21), wherein the drive shaft (29) is rotatably fixed to two crankarms (31) that are connected to the first bar (25) via a connecting rod (33).

5. Crop cutting device (1) according to claim 4, **characterized in that** each of the two crankarms (31) is rotatably limited by a respective end stop (35) in one of the low position and the lifted position, the angle of movement of the two crankarms (31) between the low position and the lifted position preferably being less than or equal to 180°.

6. Crop cutting device (1) according to claim 5, **characterized in that** each of the end stops (35) is positioned such that in the lifted position, each of the two crankarms (31) is angularly positioned behind a top dead center, and that in the low position, each of the two crankarms (31) is angularly positioned before a bottom dead center.

7. Crop cutting device (1) according to claims 4 to 6, **characterized in that** the actuator is configured to rotate the drive shaft (29) and thereby move the elongate element between the low position to the lifted position.

8. Crop cutting device (1) according to one of the previous claims, **characterized in that** the actuator is configured to move the elongate element directly, by a linkage, or by a flexible means such as a chain or belt.

9. Crop cutting device (1) according to claim 2, **characterized in that** the actuator is configured to move both of the two side plates (15) between the selection position and the working position and the elongate element between the low position and the lifted position simultaneously.

10. Crop cutting device (1) according to claim 2 or 9 and one of the claims 4 to 7, **characterized in that** each of the two crankarms (31) is rotatably supported by a respective one of the two side plates (15).

11. Crop cutting device (1) according to one of the claims 2, 9 or 10, **characterized in that** each of the two side plates (15) comprises a first guiding means (37) configured to guide the elongate element.

12. Crop cutting device (1) according to claim 11, **characterized in that** the first guiding means (37) comprises a slotted hole in each of the two side plates (15), configured to guide the elongate element.

13. Crop cutting device (1) according to one of the claims 2 or 9 to 12, **characterized in that** each of the two side plates (15) further comprises a second guiding means (39) configured to movably couple each of the two side plates (15) to the main frame (21).

14. Crop cutting device (1) according to claim 13, **characterized in that** the second guiding means (39) comprises a slotted hole in one of the two side plates (15) and the main frame (21) in operative association with studs (41) fixed to the other one of the two plates (15) and the main frame (21).

15. Agricultural machine comprising a crop cutting device (1) according to one of the previous claims.
